# FASCICULE DE BREVET EUROPEEN

(11) **EP 4 086 715 B1**
(45) Date de publication et mention de la délivrance du brevet: **10.04.2024**
(21) Numéro de dépôt: 22170685.6
(22) Date de dépôt: 29.04.2022
(51) Int. Cl.: G05B 19/05, G05B 15/02, G05D 23/19, F24F 11/50

(54) **PROCÉDÉ DE GESTION D'UNE REGULATION**
VERFAHREN ZUR STEUERUNG EINER REGULIERUNG
METHOD FOR MANAGING A CONTROL UNIT

(30) Priorité: 03.05.2021 FR 2104643
(43) Date de publication de la demande: 09.11.2022
(73) Titulaire: Delta Dore, 35270 Bonnemain (FR)
(72) Inventeur: COTARD, Perig, 35270 BONNEMAIN (FR); BERTHELOT, Daniel, 35270 BONNEMAIN (FR); LEPRINCE, Marine, 35270 BONNEMAIN (FR)
(74) Mandataire: Cabinet Le Guen Maillet

(56) Documents cités:
- WO-A1-87/01214
- US-A1- 2009 140 061
- US-A1- 2011 166 712
- US-A1- 2018 051 901

## Description

### DOMAINE TECHNIQUE

La présente invention concerne le domaine de la régulation d'un paramètre physique et notamment la régulation par programmation temporelle. L'invention concerne un procédé de gestion d'une régulation destiné à sélectionner un type de régulation et à sélectionner une programmation temporelle plutôt qu'une autre lorsque deux programmations temporelles sont accessibles. L'invention concerne également un dispositif régulateur mettant en oeuvre ledit procédé.

### ETAT DE LA TECHNIQUE ANTERIEURE

Un dispositif régulateur 200 permet d'effectuer une régulation d'un paramètre physique en exécutant une consigne. Pour cela, le dispositif régulateur 200 actionne un mécanisme visant à atteindre une valeur de référence prédéfinie dudit paramètre physique, dite valeur de consigne, en tenant compte d'une estimation de la valeur réelle du paramètre physique.

Par exemple, un thermostat permet de réguler la température d'une pièce ou d'un logement en déclenchant l'allumage d'une chaudière si une valeur réelle de température est inférieure à la valeur de consigne ou au contraire en éteignant la chaudière si la valeur réelle de température est supérieure ou égale à la valeur de consigne.

De nombreux dispositifs régulateurs sont programmables temporellement et peuvent ainsi effectuer une régulation d'un paramètre physique en fonction du temps. Pour cela, le dispositif régulateur 200 exécute une programmation temporelle comportant un ensemble de consignes, chaque consigne étant associée à un moment prédéfini. Par exemple, un thermostat peut effectuer une régulation en température autour de valeurs de consignes qui varient selon l'heure de la journée ou le jour de la semaine. Ainsi, la programmation temporelle du thermostat permet d'ajuster la température en fonction des activités prévisibles d'un utilisateur. Cela a pour avantage d'assurer le confort de vie de l'utilisateur tout en réduisant la consommation d'énergie à des moments où la température n'a pas besoin d'être élevée : par exemple, lorsque l'utilisateur est absent pendant ses horaires de travail ou lorsque l'utilisateur dort, sur des horaires nocturnes.

Selon un autre exemple, un dispositif de gestion de l'éclairage peut également exécuter une régulation temporelle afin de modifier automatiquement le flux lumineux ou la température de couleur de certaines sources lumineuses à des horaires prédéfinis, dans une propriété ou un jardin par exemple.

Selon encore un autre exemple, un dispositif de gestion des volets roulants peut exécuter une régulation temporelle afin de modifier automatiquement une position d'ouverture d'au moins un volet ou de modifier automatiquement une orientation de lamelles de store à des horaires prédéfinis.

Un dispositif régulateur 200 peut ainsi comporter une programmation temporelle interne et exécuter ainsi ladite programmation temporelle interne à l'aide d'une horloge interne.

Généralement, un dispositif régulateur 200 permet à un utilisateur de choisir entre une régulation basée sur une programmation temporelle interne et une régulation basée sur une consigne fixe. Le dispositif régulateur 200 comporte alors deux modes de fonctionnement pouvant être sélectionnés au choix : un premier mode de fonctionnement, dit mode AUTO, et un second mode de fonctionnement, dit mode MANUEL.

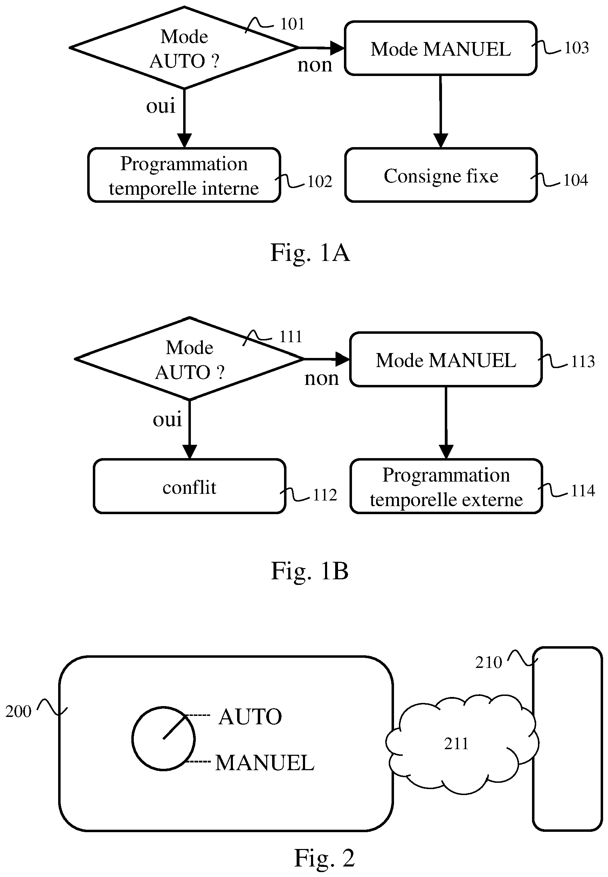

La **Fig. 1A** illustre schématiquement un procédé de gestion d'une régulation d'un dispositif régulateur 200, selon un exemple de l'art antérieur, lorsque le dispositif régulateur 200 est utilisé dans un premier contexte de fonctionnement. Le premier contexte de fonctionnement est un contexte dans lequel le dispositif régulateur 200 est indépendant et n'est donc associé à aucun dispositif maître 210.

Dans une première étape 101, le dispositif régulateur 200 détermine si le mode AUTO est activé. Si c'est le cas, le dispositif régulateur 200 effectue une étape 102. Sinon, le dispositif régulateur 200 effectue une étape 103.

A l'étape 102, le dispositif régulateur 200 effectue une régulation par l'exécution de la programmation temporelle interne.

A l'étape 103, le dispositif régulateur 200 considère que le mode MANUEL est activé et effectue une étape 104 suivante. A l'étape 104, le dispositif régulateur 200 effectue une régulation par exécution d'une consigne fixe. Ladite consigne fixe correspond à une valeur prédéterminée qui peut en outre être modifiable, par exemple manuellement.

Ainsi, l'utilisateur peut choisir, à l'aide des modes de fonctionnement, le type de régulation souhaité entre une régulation basée sur une consigne fixe ou une régulation basée sur une programmation temporelle interne.

Dans certains cas, un dispositif régulateur 200 peut être intégré à un système de domotique et est alors associé, par le biais d'un réseau de communication 211, à un dispositif maître 210 assurant la gestion du système de domotique. Il arrive alors que le dispositif maître 210 comporte lui aussi une programmation temporelle, dite programmation temporelle externe, pouvant être exécutée par le dispositif régulateur 200.

Toutefois, la présence simultanée de la programmation temporelle interne et de la programmation temporelle externe génère un conflit empêchant le dispositif régulateur 200 d'exécuter correctement la programmation temporelle interne ou la programmation temporelle externe.

La **Fig. 1B** illustre schématiquement le procédé de gestion d'une régulation temporelle du dispositif régulateur 200 selon un exemple de l'art antérieur, lorsque le dispositif régulateur 200 est utilisé dans un second contexte de fonctionnement. Dans ledit second contexte de fonctionnement, le dispositif régulateur 200 est associé à un dispositif maître 210 comportant une programmation temporelle externe.

Dans une première étape 111, similaire à l'étape 101, le dispositif régulateur 200 détermine si le mode AUTO est activé. Si c'est le cas, le dispositif régulateur 200 effectue une étape 112. Sinon, le dispositif régulateur 200 effectue une étape 113.

A l'étape 112, un conflit existe entre l'exécution de la programmation temporelle interne et l'exécution de la programmation temporelle externe. En effet, l'existence simultanée de la programmation temporelle interne du dispositif régulateur 200 et de la programmation temporelle externe du dispositif maître 210 provoque, si les programmations temporelles externes et internes sont différentes, une multitude de commandes contradictoires les unes par rapport aux autres.

Dans un tel cas, le dispositif régulateur 200 ne peut donc pas exécuter correctement de la programmation temporelle externe. En outre, le dispositif régulateur 200 ne peut pas non plus exécuter correctement la programmation temporelle interne.

A l'étape 113, le dispositif régulateur 200 considère que le mode MANUEL est activé et effectue une étape 114.

A l'étape 114, le dispositif régulateur 200 active la régulation par consigne fixe et autorise l'exécution de consignes externes. Le dispositif régulateur 200 reçoit alors et exécute au fur et à mesure chaque consigne de la programmation temporelle externe émise par le dispositif maître 210. La régulation est ainsi effectuée selon la programmation temporelle externe.

Toutefois, cette solution présente l'inconvénient d'être peu intuitive puisqu'il est nécessaire de changer de mode de fonctionnement pour obtenir l'exécution d'une programmation temporelle lorsque le dispositif régulateur 200 passe d'un premier contexte de fonctionnement à un second contexte de fonctionnement. Or, l'utilisation du mode MANUEL est un choix contre-intuitif pour de nombreux utilisateurs souhaitant obtenir une régulation basée sur une programmation temporelle externe. Il est alors fréquent que le mode MANUEL ne soit pas sélectionné, empêchant ainsi la possibilité d'utiliser la programmation temporelle externe.

Le document US 2009/0140061 A1 décrit un dispositif régulateur destiné à émettre des commandes thermostatiques et comportant un mécanisme de verrouillage configurable. Le dispositif régulateur comporte une consigne fixe, et il peut être associé à un dispositif maître comportant une programmation temporelle externe.

Il est alors souhaitable de pallier ces inconvénients de l'état de la technique.

Il est notamment souhaitable de fournir une solution qui permette d'éviter un conflit entre deux programmations temporelles. Il est souhaitable de fournir une solution qui permette de sélectionner une programmation temporelle lorsque deux programmations temporelles sont disponibles. Il est en outre souhaitable de fournir une solution qui soit intuitive pour un utilisateur. Il est également souhaitable de fournir une solution implémentable par un dispositif régulateur qui n'est pas configuré pour permettre une synchronisation de plusieurs programmations.

### EXPOSE DE L'INVENTION

Un objet de la présente invention est de proposer un procédé de gestion d'une régulation d'un dispositif régulateur, le dispositif régulateur comportant un premier mode et un deuxième mode, lesdits premier et second modes pouvant être sélectionnés alternativement, le dispositif régulateur comportant en outre une consigne fixe et une programmation temporelle interne. Le dispositif régulateur peut être associé, dans un réseau de communication, à un dispositif maître comportant une programmation temporelle externe. Le procédé est exécuté par le dispositif régulateur et comporte les étapes de :
- exécuter la programmation temporelle interne lorsque le premier mode est sélectionné et lorsqu'une variable v du dispositif régulateur est égale à une première valeur prédéfini
- exécuter la programmation temporelle externe lorsque le premier mode est sélectionné et lorsque ladite variable v est égale à une seconde valeur prédéfinie,
- exécuter la consigne fixe lorsque le second mode est sélectionné,

Le procédé comporte en outre :
- Initialiser la variable v à la première valeur prédéfinie,
- affecter à la variable v la seconde valeur prédéfinie lorsqu'une association à un dispositif maître est détectée,
- affecter à la variable v la première valeur prédéfinie si une désassociation du dispositif maître est détectée.

Ainsi, le dispositif régulateur peut exécuter la programmation temporelle externe sans risque de conflit avec la programmation temporelle interne lorsque le dispositif régulateur est associé au dispositif maître. En outre, un utilisateur choisit le même mode pour obtenir l'exécution d'une programmation temporelle que ce soit dans un contexte de fonctionnement indépendant ou dans un contexte de fonctionnement en association à un dispositif maître, ce qui permet une utilisation intuitive.

Selon un mode de réalisation particulier, le procédé comporte en outre de détecter si la variable v est modifiée manuellement.

Ainsi, il est possible de forcer manuellement, par une intervention extérieure, le contexte de fonctionnement reconnu par le dispositif régulateur, ce qui permet par exemple de forcer l'exécution de la programmation temporelle interne même lorsque le dispositif régulateur est associé à un dispositif maître.

Selon un mode de réalisation particulier, le procédé comporte en outre d'afficher une information indiquant de désactiver la programmation temporelle externe si la variable v est égale à la première valeur prédéfinie après qu'une association à un dispositif maître est détectée.

Ainsi, il est possible pour un utilisateur d'effectuer un débrayage manuel de la programmation temporelle externe et d' exécuter la programmation temporelle interne même lorsque le dispositif régulateur reste associé à un dispositif maître.

Selon un mode de réalisation particulier, le procédé comporte en outre d'afficher une information indiquant de réactiver la programmation temporelle externe si la variable v passe de la première valeur prédéfinie à la seconde valeur prédéfinie après qu'une association à un dispositif maître est détectée.

Ainsi, il est possible pour un utilisateur d'effectuer un rembrayage manuel de la programmation temporelle externe lorsque celle-ci a été débrayée et d'exécuter à nouveau la programmation temporelle externe sans qu'il y ait besoin d'une désassociation puis d'une réassociation du dispositif maître.

Selon un mode de réalisation particulier, chaque programmation temporelle comporte plusieurs consignes et chaque consigne comporte une valeur de consigne associée à un instant prédéfini, ledit instant prédéfini déterminant le début d'une plage horaire pendant laquelle ladite consigne est effective.

Le dispositif régulateur exécute ainsi successivement chaque consigne de la programmation temporelle de manière autonome.

Selon un mode de réalisation particulier, le dispositif régulateur est un thermostat, chaque valeur de consigne est une température, et le dispositif régulateur comporte en outre des moyens pour mesurer une température et des moyens pour maintenir ou faire évoluer ladite température de sorte à exécuter chaque consigne.

Selon un mode de réalisation particulier, le dispositif régulateur est un dispositif de gestion d'un éclairage, chaque valeur de consigne indique un flux lumineux ou une température de couleur d'au moins une source lumineuse, et le dispositif régulateur comporte en outre des moyens pour déterminer le flux lumineux ou la température de couleur de ladite au moins une source lumineuse et des moyens pour modifier le flux lumineux ou la température de couleur de ladite au moins une source lumineuse de sorte à exécuter chaque consigne.

Selon un mode de réalisation particulier, le dispositif régulateur est un dispositif de gestion de volets roulants, chaque valeur de consigne indique une position d'ouverture d'au moins un volet ou un degré d'orientation de lamelles d'au moins un store, et le dispositif régulateur comporte en outre des moyens pour déterminer la position d'ouverture du au moins un volet ou le degré d'orientation des lamelles du au moins un store et des moyens pour maintenir ou faire évoluer la position d'ouverture du au moins un volet ou le degré d'orientation des lamelles du au moins un store de sorte à exécuter chaque consigne.

L'invention concerne également un dispositif régulateur comportant un premier mode et un deuxième mode, lesdits premier et second modes pouvant être sélectionnés alternativement, le dispositif régulateur comportant en outre une consigne fixe et une programmation temporelle interne. Le dispositif régulateur peut être associé dans un réseau de communication à un dispositif maître comportant une programmation temporelle externe. Le dispositif régulateur comporte :
- - des moyens pour exécuter la programmation temporelle interne lorsque le premier mode est sélectionné et lorsqu'une variable v du dispositif régulateur est égale à une première valeur prédéfinie,
- - des moyens pour exécuter la programmation temporelle externe lorsque le premier mode est sélectionné et lorsque ladite variable v est égale à une seconde valeur prédéfinie,
- - des moyens pour exécuter la consigne fixe lorsque le second mode est sélectionné, Et comporte :

- Des moyens pour initialiser la variable v à la première valeur prédéfinie,
- Des moyens pour affecter à la variable v la seconde valeur prédéfinie lorsqu'une association à un dispositif maître est détectée,
- Des moyens pour affecter à la variable v la première valeur prédéfinie si une désassociation du dispositif maître est détectée.

Selon un mode de réalisation particulier, chaque programmation temporelle comporte plusieurs consignes, chaque consigne comportant une valeur de consigne associée à un instant prédéfini, ledit instant prédéfini déterminant le début d'une plage horaire pendant laquelle ladite consigne est effective, et le dispositif régulateur est un thermostat, chaque consigne comportant des valeurs de consigne en température, le dispositif régulateur comportant en outre des moyens pour mesurer une température et des moyens pour maintenir ou faire évoluer ladite température de sorte à exécuter chaque consigne.

Selon un mode de réalisation particulier, chaque programmation temporelle comporte plusieurs consignes, chaque consigne comportant une valeur de consigne associée à un instant prédéfini, ledit instant prédéfini déterminant le début d'une plage horaire pendant laquelle ladite consigne est effective, et le dispositif régulateur est un dispositif de gestion d'un éclairage, chaque valeur de consigne indiquant un flux lumineux ou une température de couleur d'au moins une source lumineuse, le dispositif régulateur comportant en outre des moyens pour déterminer le flux lumineux ou la température de couleur de ladite au moins une source lumineuse et des moyens pour modifier le flux lumineux ou la température de couleur de ladite au moins une source lumineuse de sorte à exécuter chaque consigne.

Selon un mode de réalisation particulier, chaque programmation temporelle comporte plusieurs consignes, chaque consigne comportant une valeur de consigne associée à un instant prédéfini, ledit instant prédéfini déterminant le début d'une plage horaire pendant laquelle ladite consigne est effective, et le dispositif régulateur est un dispositif de gestion de volets roulants, chaque valeur de consigne indiquant une position d'ouverture d'au moins un volet ou un degré d'orientation de lamelles d'au moins un store, le dispositif régulateur comportant en outre des moyens pour déterminer la position d'ouverture du au moins un volet ou le degré d'orientation des lamelles du au moins un store et des moyens pour maintenir ou faire évoluer la position d'ouverture du au moins un volet ou le degré d'orientation des lamelles du au moins un store de sorte à exécuter chaque consigne.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de leurs modes de réalisation, lorsque ledit programme est exécuté par le processeur.

L'invention concerne également un support de stockage d'informations stockant un tel programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1A] illustre schématiquement un procédé de gestion d'une régulation dans un premier contexte de fonctionnement, selon un exemple de réalisation de l'art antérieur ;
[Fig. 1B] illustre schématiquement le procédé de gestion d'une régulation dans un second contexte de fonctionnement, selon un exemple de réalisation de l'art antérieur ;
[Fig. 2] illustre schématiquement un dispositif régulateur selon un exemple de réalisation de la présente invention ;
[Fig. 3] illustre schématiquement une première phase d'un procédé de gestion d'une régulation selon un exemple de réalisation de la présente invention ;
[Fig. 4] illustre schématiquement une seconde phase du procédé de gestion d'une régulation selon un exemple de réalisation de la présente invention ;
[Fig. 5] illustre schématiquement une architecture matérielle d'une unité de contrôle du dispositif régulateur.

### EXPOSE DETAILLE DE MODES DE REALISATION

La **Fig. 2** illustre ainsi schématiquement un dispositif régulateur 200 selon un exemple de réalisation de la présente invention.

Le dispositif régulateur 200 effectue une régulation d'un paramètre physique en exécutant une consigne. La consigne est une instruction comportant une valeur de référence à atteindre dudit paramètre physique, dite valeur de consigne. A l'exécution de la consigne, le dispositif régulateur 200 peut effectuer au moins une action visant à atteindre la valeur de consigne. Le dispositif régulateur 200 comporte généralement un moyen pour mesurer une valeur courante du paramètre physique, permettant d'estimer la valeur réelle. Le dispositif régulateur 200 comporte en outre des moyens pour maintenir ou faire évoluer la valeur réelle du paramètre physique en fonction de la valeur courante et de la valeur de consigne à atteindre.

Par exemple, un thermostat est un dispositif régulateur 200 permettant d'effectuer une régulation en température et comportant une consigne dont la valeur de consigne est une température à atteindre, comportant des moyens pour mesurer la température tels qu'un thermomètre, et comportant des moyens pour maintenir ou faire évoluer la température tels que des actionneurs de vannes d'un réseau d'eau chaude ou encore un dispositif d'allumage et d'extinction d'une chaudière ou d'un réseau électrique alimentant un radiateur ou un convecteur.

Ainsi, un thermostat permet de réguler la température d'un logement en exécutant une consigne pour atteindre une valeur de consigne prédéfinie en température. Le thermostat déclenche alors l'allumage d'une chaudière si la valeur courante de température (autrement dit, la valeur mesurée) est inférieure à la valeur de consigne ou au contraire éteint la chaudière si la valeur courante de température est supérieure ou égale à la valeur de consigne. Alternativement, le thermostat actionne un système de vannes d'un réseau d'eau chaude de sorte à faire entrer de l'eau plus chaude que l'eau dudit réseau si la valeur courante de température est inférieure à la valeur de consigne ou de sorte à faire entrer de l'eau plus froide que l'eau dudit réseau si la valeur courante de température est supérieure à la valeur de consigne.

Selon un autre exemple, un dispositif de gestion d'un éclairage permettant d'ajuster des caractéristiques lumineuses de sources lumineuses comporte une consigne dont la valeur de consigne est une valeur de flux lumineux, pouvant être exprimée en pourcentage d'un flux lumineux maximal, ou une valeur d'intensité lumineuse pouvant être exprimée en pourcentage d'une intensité lumineuse maximale. La valeur de consigne peut alternativement être une température de couleur de lumière parmi plusieurs températures de couleur disponibles prédéfinies, chaque température de couleur correspondant par exemple à l'émission d'une diode électroluminescente intégrée à une source lumineuse. Le dispositif de gestion d'un éclairage comporte en outre un moyen pour déterminer un flux lumineux, une intensité lumineuse ou une température de couleur de lumière associés à une source lumineuse et comporte des moyens pour modifier le flux lumineux, l'intensité lumineuse ou la température de couleur associés à la source lumineuse tels qu'un interrupteur, un gradateur de puissance ou un variateur de température de couleur.

Un dispositif de gestion de volets roulants peut, selon un autre exemple, effectuer une régulation de l'ouverture d'un volet avec une consigne dont la valeur de consigne est une position d'ouverture intermédiaire entre une ouverture totale ou une fermeture totale, pouvant être exprimée par exemple en un pourcentage d'ouverture. Alternativement, la valeur de consigne est un degré d'orientation de lamelles de store, pouvant être exprimée en un pourcentage. Le dispositif de gestion de volets roulants comporte un moyen pour déterminer la position d'ouverture d'un volet ou le degré d'orientation de lamelles d'un store et comporte des moyens pour maintenir une position d'un volet ou pour modifier la position d'ouverture du volet ou le degré d'orientation des lamelles du store tels qu'un dispositif de pilotage d'un moteur.

Le dispositif régulateur 200 peut effectuer un premier type de régulation consistant à exécuter une consigne dite fixe, autrement dit une consigne comportant une unique valeur de consigne prédéfinie. Selon un exemple de réalisation, ladite consigne fixe est en outre modifiable de manière immédiate, par exemple manuellement : il est ainsi possible pour un utilisateur de modifier directement et instantanément la consigne fixe.

Le dispositif régulateur 200 peut effectuer un second type de régulation consistant à exécuter une programmation temporelle. Une programmation temporelle comporte un ensemble de consignes prédéfinies. Chaque consigne comporte une valeur de consigne associée à un instant prédéfini permettant de déterminer le début d'une plage horaire pendant laquelle ladite consigne est effective. Ladite consigne est ensuite effective jusqu'à ce qu'une nouvelle consigne, associée à un nouvel instant prédéfini, soit effective à son tour.

Une programmation temporelle qui serait définie sur une journée peut ainsi comporter, par exemple, une première consigne avec une première valeur de consigne associée à un premier horaire de la journée et une deuxième consigne avec une deuxième valeur de consigne associée à un second horaire de la journée. Lorsqu'il exécute une telle programmation temporelle, le dispositif régulateur 200 exécute la première consigne, autrement dit régule autour de la première valeur de consigne, dès lors que le premier horaire survient. Lorsque le deuxième horaire survient, le dispositif régulateur 200 exécute alors la deuxième consigne, qui remplace automatiquement la première consigne. Le dispositif régulateur 200 exécute ainsi successivement chaque consigne de la programmation temporelle de manière autonome, autrement dit sans intervention extérieure.

Une programmation temporelle peut comporter un nombre de consignes variable et peut être définie sur une durée totale qui varie également selon les cas, par exemple sur une journée, sur une semaine, sur un mois ou même sur une année.

Selon un exemple, une programmation temporelle est définie sur une journée et comporte quatre consignes différentes dont les valeurs de consignes sont associées à quatre horaires de la journée. En prenant le cas particulier d'un thermostat, la programmation temporelle comporte par exemple une première valeur de consigne en température de 20°C, associée à un premier horaire de 6h00, une seconde valeur de consigne en température de 17°C, associée à un deuxième horaire de 9h00, une troisième valeur de consigne en température de 20°C, associée à un troisième horaire de 18h00, puis une quatrième valeur de consigne en température de16°c, associée à un quatrième horaire de 23h.

En prenant un autre cas particulier d'un dispositif de gestion d'un éclairage, la programmation temporelle peut comporter par exemple une première valeur de consigne de 75% de flux lumineux associée à un premier horaire de 7h, une seconde valeur de consigne de 0% de flux lumineux associée à un deuxième horaire de 8h, une troisième valeur de consigne de 100% de flux lumineux associée à un troisième horaire de 19h, et une quatrième valeur de consigne de 0% de flux lumineux, associée à un quatrième horaire de 23h.

Le dispositif régulateur 200 comporte une consigne fixe et comporte une première programmation temporelle dite programmation temporelle interne. Le dispositif régulateur 200 exécute la programmation temporelle interne à l'aide d'une horloge interne permettant de connaître la date et l'heure en cours.

En outre, le dispositif régulateur 200 comporte deux modes de fonctionnement pouvant être sélectionnés alternativement : un premier mode de fonctionnement, dit mode AUTO, et un second mode de fonctionnement dit mode MANUEL.

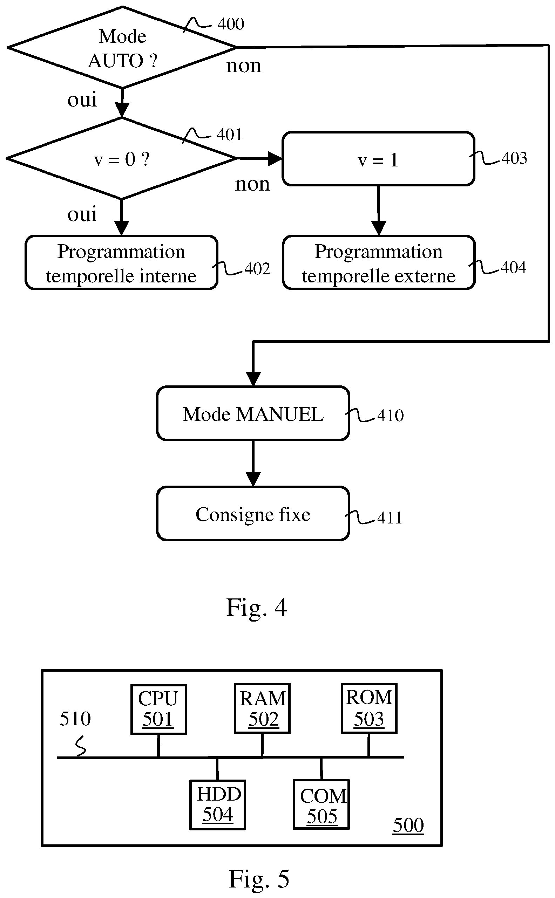

Le dispositif régulateur 200 comporte une unité de contrôle 500, décrite à la Fig. 5, configurée pour pouvoir communiquer avec au moins un autre dispositif dans un réseau de communication 211. Le dispositif régulateur 200 peut s'associer à un dispositif maître 210 par le biais dudit réseau de communication 211 en échangeant des messages avec ledit dispositif maître 210 selon une procédure d'association prédéfinie. Le dispositif maître 210 se distingue d'un autre dispositif associé en ce qu'il comporte une programmation temporelle propre, dite programmation temporelle externe, ainsi qu'une horloge qui peut être interne au dispositif maître 210 ou accessible par le biais du réseau de communication 211.

Le dispositif régulateur 200, lorsqu'il est associé au dispositif maître 210, peut effectuer une régulation en exécutant la programmation temporelle externe, autrement dit en exécutant au moins une consigne externe.

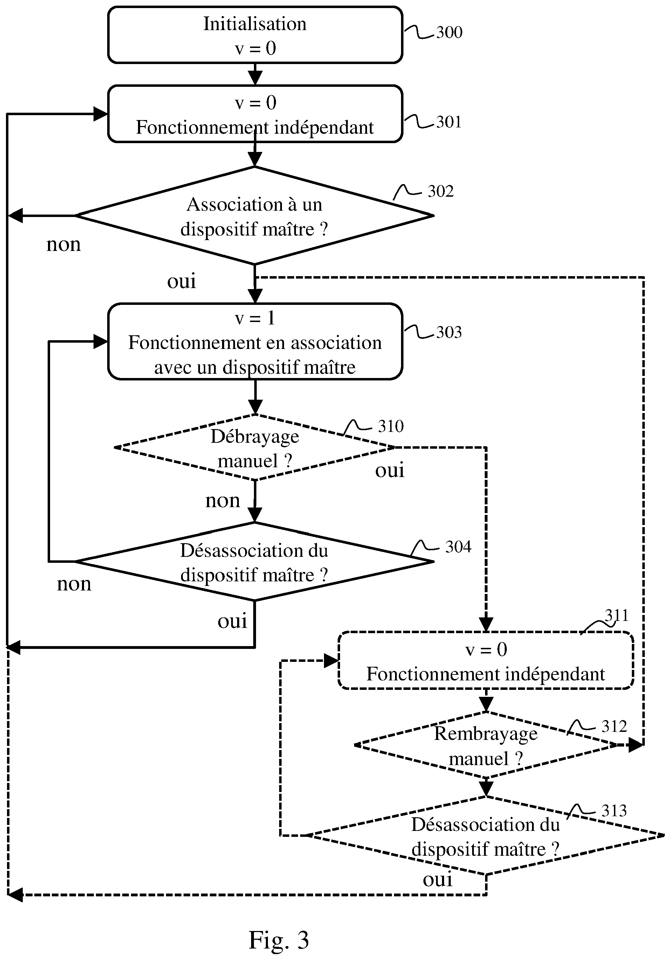

La **Fig. 3** illustre schématiquement une première phase du procédé de gestion d'une régulation temporelle dans un dispositif régulateur 200. La première phase dudit procédé de gestion est destinée à déterminer un contexte de fonctionnement du dispositif régulateur 200.

Dans une première étape 300, le dispositif régulateur 200 initialise une variable v à une première valeur prédéfinie, par exemple v = 0. L'étape 300 peut être effectuée, par exemple, lors de la fabrication dudit dispositif régulateur 200, ou lors de l'installation ou la mise en service dudit dispositif régulateur 200.

Dans une étape 301 suivante, le dispositif régulateur 200 considère un premier contexte de fonctionnement, dit contexte de fonctionnement indépendant. Dans le contexte de fonctionnement indépendant, le dispositif régulateur 200 peut effectuer une régulation en exécutant la consigne fixe dudit dispositif régulateur 200 ou en exécutant la programmation temporelle interne. Le choix entre l'exécution de la consigne fixe et de la programmation temporelle interne est alors effectué, par le dispositif régulateur 200, en fonction du mode de fonctionnement sélectionné, comme décrit ci-dessous à la Fig. 4.

Dans une étape 302 suivante, le dispositif régulateur 200 détecte si une procédure d'association à un dispositif maître 210 est effectuée. Pour cela, le dispositif régulateur 200 détermine si une procédure d'association avec un nouveau dispositif est effectuée dans le réseau de communication 211, et détecte un identifiant représentatif d'un dispositif maître 210 dans un message reçu en provenance dudit nouveau dispositif associé. Si c'est le cas, une étape 303 est effectuée. Sinon, l'étape 301 est réitérée.

A l'étape 303, le dispositif régulateur 200 modifie la variable v en y affectant une seconde valeur prédéfinie, par exemple v = 1. Le dispositif régulateur 200 considère alors un second contexte de fonctionnement, dit contexte de fonctionnement associé à un dispositif maître. Dans le contexte de fonctionnement associé à un dispositif maître, le dispositif régulateur 200 peut effectuer une régulation en exécutant la consigne fixe du dispositif régulateur 200 ou en exécutant sur la programmation temporelle externe. Le choix entre une régulation basée sur une consigne fixe et une régulation basée sur la programmation temporelle externe est alors effectué, par le dispositif régulateur 200, en fonction du mode de fonctionnement sélectionné, comme décrit à la Fig. 4.

Le dispositif régulateur 200 effectue ensuite une étape 310, optionnelle, ou une étape 304.

A l'étape 304, le dispositif régulateur 200 détecte si une désassociation du dispositif maître est effectuée. Pour cela, le dispositif régulateur 200 détermine si l'association avec ledit dispositif maître 210 est terminée, par exemple à la suite d'une procédure de désassociation avec ledit dispositif maître 210 ou lorsqu'une absence de communication est détectée entre le dispositif régulateur 200 et le dispositif maître 210 pendant une durée dépassant un seuil prédéfini. Si c'est le cas, le dispositif régulateur 200 effectue une étape 305. Sinon, le dispositif régulateur 200 réitère l'étape 303.

A l'étape 305, le dispositif régulateur 200 modifie la variable v en y affectant la première valeur prédéfinie (par exemple v = 0). Puis l'étape 301 est réitérée par le dispositif régulateur 200.

A l'étape 310 optionnelle, le dispositif régulateur 200 détermine si un débrayage manuel effectué par l'utilisateur du dispositif régulateur 200 de la programmation temporelle externe est effectué. Le débrayage manuel consiste à modifier manuellement, donc de manière forcée, la variable v sans qu'il y ait de désassociation du dispositif maître, afin que la programmation temporelle externe ne soit plus prioritaire par rapport à la programmation temporelle interne. Si le dispositif régulateur 200 reste associé au dispositif maître et que la variable v est égale à la première valeur prédéfinie (par exemple v = 0), alors le débrayage manuel est effectué et le dispositif régulateur 200 effectue une étape 311. Sinon, le dispositif régulateur 200 effectue l'étape 304.

A l'étape 311, le dispositif régulateur 200 considère le premier contexte de fonctionnement, dit contexte de fonctionnement indépendant.

Selon un mode particulier de réalisation, le dispositif régulateur 200 affiche en outre, à l'étape 311, une information telle qu'un message ou un pictogramme indiquant à un utilisateur de désactiver la programmation temporelle externe, par exemple en l'effaçant du dispositif maître 210, ou de s'assurer que la programmation temporelle externe est effectivement désactivée. Ainsi, il est possible de permettre au dispositif régulateur 200 d'exécuter la programmation temporelle interne sans risque de conflit même lorsque le dispositif régulateur 200 est associé au dispositif maître 210.

Dans une étape 312 suivante, le dispositif régulateur 200 détermine si un rembrayage manuel de la programmation externe est effectué par un utilisateur du dispositif régulateur 200. Le rembrayage manuel consiste à modifier manuellement, donc de manière forcée, la variable v après qu'il y a eu un débrayage manuel. Si la variable v est égale à la seconde valeur prédéfinie (par exemple v = 1) après un débrayage manuel, alors le rembrayage manuel est effectué et le dispositif régulateur 200 réitère l'étape 303. En outre, le dispositif régulateur 200 peut alors afficher une information telle qu'un message ou un pictogramme indiquant à un utilisateur de réactiver la programmation temporelle externe ou de s'assurer que la programmation temporelle externe est effectivement réactivée, par exemple en la reprogrammant sur le dispositif maître 210.

Sinon, le dispositif régulateur 200 effectue une étape 313.

A l'étape 313, semblable à l'étape 304, le dispositif régulateur 200 détecte si une désassociation du dispositif maître est effectuée. Si c'est le cas, l'étape 301 est réitérée. Sinon, l'étape 311 est réitérée.

La **Fig. 4** illustre schématiquement une seconde phase d'un procédé de gestion d'une régulation temporelle dans un dispositif régulateur 200. La seconde phase dudit procédé de gestion est destinée à sélectionner un type de régulation et/ou une programmation temporelle en fonction d'un mode de fonctionnement et d'un contexte de fonctionnement.

Dans une première étape 400, le dispositif régulateur 200 détermine si le mode de fonctionnement sélectionné est le mode AUTO. Si c'est le cas, une étape 401 est effectuée. Sinon, une étape 410 est effectuée.

A l'étape 401, le dispositif régulateur 200 détermine si la variable v est égale à la première valeur prédéfinie (par exemple, si v = 0). Si c'est le cas, le dispositif régulateur 200 considère qu'il se trouve dans un contexte de fonctionnement indépendant et effectue une étape 402. Sinon, une étape 403 est effectuée.

A l'étape 402, le dispositif régulateur 200 effectue une régulation en exécutant la programmation temporelle interne. Ainsi, lorsqu'un utilisateur sélectionne le mode AUTO, la programmation temporelle interne est exécutée si le dispositif régulateur 200 n'est pas associé à un dispositif maître 210. Dans le contexte de fonctionnement indépendant, le dispositif régulateur 200 a ainsi un fonctionnement identique avec ou sans la mise en oeuvre de la variable v, ce qui permet une utilisation intuitive.

Notons, à l'étape 402, que dans un cas de débrayage manuel tel que détecté à l'étape 310, par exemple dans le cas où la première valeur prédéfinie est affectée à la variable v de manière forcée alors que le dispositif maître 210 reste associé au dispositif régulateur 200, il est alors nécessaire que la programmation temporelle externe soit désactivée, autrement dit soit effacée ou soit inaccessible pour le dispositif régulateur 200, afin de permettre l'exécution correcte de la programmation temporelle interne. Il est ainsi possible d'exécuter la programmation temporelle interne même si le dispositif régulateur 200 est associé à un dispositif maître 210.

A l'étape 403, le dispositif régulateur 200 détecte que la variable v est égale à la seconde valeur prédéfinie (par exemple, v = 1) et considère alors qu'il se trouve dans un contexte de fonctionnement associé à un dispositif maître. Une étape 404 est ensuite effectuée.

A l'étape 404, le dispositif régulateur 200 effectue une régulation en exécutant la programmation temporelle externe. Pour cela, le dispositif régulateur 200 mémorise chaque consigne reçue par le dispositif maître 210 et détecte un identifiant associé à la consigne indiquant s'il s'agit d'une consigne programmée, par exemple issue de la programmation temporelle externe ou s'il s'agit d'une consigne ponctuelle. Le dispositif régulateur 200 exécute alors chaque consigne programmée reçue. Selon un mode de réalisation, le dispositif régulateur 200 exécute en outre chaque consigne ponctuelle reçue jusqu'à réception d'une nouvelle consigne programmée, ladite consigne programmée étant alors exécutée. Ainsi, un utilisateur peut conserver la sélection du mode AUTO pour que le dispositif régulateur 200 exécute la programmation temporelle externe, ce qui reste intuitif. En outre, le dispositif régulateur 200 sélectionne de manière prioritaire la programmation temporelle externe par rapport à la programmation temporelle interne, ce qui permet d'éviter un conflit. La programmation temporelle externe est alors correctement exécutée.

Notons, à l'étape 404, que si la programmation temporelle externe est désactivée, autrement dit est effacée ou inaccessible d'un point de vue du dispositif régulateur 200, alors le dispositif régulateur 200 exécute la consigne fixe. Ladite consigne fixe peut être en outre modifiée depuis le dispositif maître 210. Cela peut être le cas si un rembrayage manuel est détecté, comme à l'étape 312, sans que la programmation temporelle externe ne soit à nouveau accessible depuis le dispositif régulateur 200, par exemple après que la programmation temporelle externe a été effacée manuellement du dispositif maître 210.

A l'étape 410, le dispositif régulateur 200 détecte que le mode de fonctionnement sélectionné est le mode MANUEL.

Dans une étape 411 suivante, le dispositif régulateur 200 effectue une régulation en exécutant la consigne fixe dudit dispositif régulateur 200. Si le dispositif régulateur 200 est associé au dispositif maître 210, le dispositif régulateur 200 identifie chaque consigne programmée et chaque consigne ponctuelle reçue et exécute alors chaque consigne ponctuelle mais n'exécute pas de consigne programmée.

Ainsi, l'exécution de la consigne fixe par le dispositif régulateur 200 est à chaque fois effectuée dans le mode MANUEL, ce qui permet une utilisation intuitive à un utilisateur.

La **Fig. 5** illustre schématiquement une architecture matérielle d'une unité de contrôle 500 du dispositif régulateur 200.

L'unité de contrôle 500 comporte alors, reliés par un bus de communication 510 ; un processeur ou CPU (« Central Processing Unit » en anglais) 501 ; une mémoire vive RAM 502 ; une mémoire morte ROM (« Read Only Memory » en anglais) 503 ; une unité de stockage 504, telle qu'un disque dur HDD (« Hard Disk Drive » en anglais), ou un lecteur de support de stockage, tel qu'un lecteur de cartes SD (« Secure Digital » en anglais) ; et une interface COM 505 permettant de communiquer avec des périphériques réseaux.

Le processeur CPU 501 est capable d'exécuter des instructions chargées dans la RAM 502 à partir de la ROM 503, d'une mémoire externe (telle qu'une carte SD), d'un support de stockage, ou d'un réseau de communication. Lorsque l'unité de contrôle 500 est mise sous tension, le processeur CPU 501 est capable de lire de la RAM 502 des instructions et de les exécuter. Ces instructions forment un programme d'ordinateur causant l'implémentation, par le processeur CPU 501, de tout ou partie des étapes décrites ici en relation avec le dispositif régulateur 200 pour l'unité de contrôle 500.

Tout ou partie desdites étapes peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais). D'une manière générale, le dispositif régulateur 200 comporte de la circuiterie électronique adaptée et configurée pour implémenter les étapes décrites ici en relation avec ledit dispositif régulateur 200.

## Revendications

1. Procédé de gestion d'une régulation d'un dispositif régulateur (200), le dispositif régulateur (200) comportant un premier mode (AUTO) et un deuxième mode (MANUEL), lesdits premier et second modes pouvant être sélectionnés alternativement, le dispositif régulateur (200) comportant en outre une consigne fixe et une programmation temporelle interne, le dispositif régulateur (200) pouvant être associé, dans un réseau de communication (211), à un dispositif maître (210) comportant une programmation temporelle externe, le procédé étant exécuté par le dispositif régulateur (200) et étant **caractérisé en ce qu'**il comporte les étapes de :
- - exécuter (402) la programmation temporelle interne lorsque le premier mode (AUTO) est sélectionné (400) et lorsqu'une variable v du dispositif régulateur est égale à une première valeur prédéfinie (401),
- - exécuter (404) la programmation temporelle externe lorsque le premier mode (AUTO) est sélectionné (400) et lorsque ladite variable v est égale à une seconde valeur prédéfinie (403),
- - exécuter (411) la consigne fixe lorsque le second mode (MANUEL) est sélectionné (410),
et **en ce que** le procédé comporte en outre :
- Initialiser (300) la variable v à la première valeur prédéfinie,
- Affecter (303) à la variable v la seconde valeur prédéfinie lorsqu'une association à un dispositif maître est détectée (302),
- Affecter (301) à la variable v la première valeur prédéfinie si une désassociation du dispositif maître est détectée (304).

2. Procédé selon la revendication 1, **caractérisé en ce qu'**il comporte en outre :
- Détecter si la variable v est modifiée manuellement.

3. Procédé selon la revendication 2, **caractérisé en ce que** le procédé comporte en outre :
- afficher une information indiquant de désactiver la programmation temporelle externe si la variable v est égale à la première valeur prédéfinie (310) après qu'une association à un dispositif maître est détectée (302).

4. Procédé selon l'une des revendications 2 et 3, **caractérisé en ce qu'**il comporte en outre :
- afficher une information indiquant de réactiver la programmation temporelle externe si la variable v passe (312) de la première valeur prédéfinie à la seconde valeur prédéfinie après qu'une association à un dispositif maître est détectée (302).

5. Procédé selon l'une quelconque des revendications 1 à 4, **caractérisé en ce que** chaque programmation temporelle comporte plusieurs consignes et **en ce que** chaque consigne comporte une valeur de consigne associée à un instant prédéfini, ledit instant prédéfini déterminant le début d'une plage horaire pendant laquelle ladite consigne est effective.

6. Procédé selon la revendication 5, **caractérisé en ce que** le dispositif régulateur (200) est un thermostat, **en ce que** chaque valeur de consigne est une température, le dispositif régulateur (200) comportant en outre des moyens pour mesurer une température et des moyens pour maintenir ou faire évoluer ladite température de sorte à exécuter chaque consigne.

7. Procédé selon la revendication 5, **caractérisé en ce que** le dispositif régulateur (200) est un dispositif de gestion d'un éclairage, **en ce que** chaque valeur de consigne indique un flux lumineux ou une température de couleur d'au moins une source lumineuse, le dispositif régulateur (200) comportant en outre des moyens pour déterminer le flux lumineux ou la température de couleur de ladite au moins une source lumineuse et des moyens pour modifier le flux lumineux ou la température de couleur de ladite au moins une source lumineuse de sorte à exécuter chaque consigne.

8. Procédé selon la revendication 5, **caractérisé en ce que** le dispositif régulateur (200) est un dispositif de gestion de volets roulants, **en ce que** chaque valeur de consigne indique une position d'ouverture d'au moins un volet ou un degré d'orientation de lamelles d'au moins un store, le dispositif régulateur (200) comportant en outre des moyens pour déterminer la position d'ouverture du au moins un volet ou le degré d'orientation des lamelles du au moins un store et des moyens pour maintenir ou faire évoluer la position d'ouverture du au moins un volet ou le degré d'orientation des lamelles du au moins un store de sorte à exécuter chaque consigne.

9. Dispositif régulateur (200) comportant un premier mode (AUTO) et un deuxième mode (MANUEL), lesdits premier et second modes pouvant être sélectionnés alternativement, le dispositif régulateur (200) comportant en outre une consigne fixe et une programmation temporelle interne, le dispositif régulateur (200) pouvant être associé dans un réseau de communication (211) à un dispositif maître (210) comportant une programmation temporelle externe, le dispositif régulateur (200) étant **caractérisé en ce qu'**il comporte :
- - des moyens pour exécuter (402) la programmation temporelle interne lorsque le premier mode (AUTO) est sélectionné et lorsqu'une variable v du dispositif régulateur est égale à une première valeur prédéfinie,
- - des moyens pour exécuter (404) la programmation temporelle externe lorsque le premier mode (AUTO) est sélectionné et lorsque ladite variable v est égale à une seconde valeur prédéfinie,
- - des moyens pour exécuter (411) la consigne fixe lorsque le second mode (MANUEL) est sélectionné,
Et comporte :
- Des moyens pour initialiser (300) la variable v à la première valeur prédéfinie,
- Des moyens pour affecter (303) à la variable v la seconde valeur prédéfinie lorsqu'une association à un dispositif maître est détectée,
- Des moyens pour affecter (301) à la variable v la première valeur prédéfinie si une désassociation du dispositif maître est détectée.

10. Dispositif régulateur selon la revendication 9, **caractérisé en ce que** chaque programmation temporelle comporte plusieurs consignes, chaque consigne comportant une valeur de consigne associée à un instant prédéfini, ledit instant prédéfini déterminant le début d'une plage horaire pendant laquelle ladite consigne est effective, et **en ce que** le dispositif régulateur (200) est un thermostat, chaque consigne comportant des valeurs de consigne en température, et le dispositif régulateur (200) comportant en outre des moyens pour mesurer une température et des moyens pour maintenir ou faire évoluer ladite température de sorte à exécuter chaque consigne.

11. Un programme d'ordinateur, **caractérisé en ce qu'**il comprend des instructions pour implémenter, par un processeur, le procédé selon l'une quelconque des revendications 1 à 8, lorsque ledit programme est exécuté par ledit processeur.

12. Un support de stockage d'informations, **caractérisé en ce qu'**il stocke un programme d'ordinateur comprenant des instructions pour implémenter, par un processeur, le procédé selon l'une quelconque des revendications 1 à 8, lorsque ledit programme est exécuté par ledit processeur.

## Patentansprüche

1. Verfahren zur Verwaltung einer Regelung einer Reglervorrichtung (200), wobei die Reglervorrichtung (200) einen ersten Modus (AUTO) und einen zweiten Modus (MANUEL) aufweist, wobei die ersten und zweiten Modi abwechselnd ausgewählt werden können, wobei die Reglervorrichtung (200) außerdem eine feste Vorgabe und eine interne Zeitprogrammierung aufweist, wobei die Reglervorrichtung (200) in einem Kommunikationsnetzwerk (211) einer Hauptvorrichtung (210) zugeordnet werden kann, die eine externe Zeitprogrammierung aufweist, wobei das Verfahren von der Reglervorrichtung (200) ausgeführt wird und **dadurch gekennzeichnet ist, dass** es die folgenden Schritte aufweist:
- Ausführen (402) der internen Zeitprogrammierung, wenn der erste Modus (AUTO) ausgewählt ist (400) und wenn eine Variable v der Reglervorrichtung gleich einem ersten vordefinierten Wert (401) ist,
- Ausführen (404) der externen Zeitprogrammierung, wenn der erste Modus (AUTO) ausgewählt ist (400) und wenn die Variable v gleich einem zweiten vordefinierten Wert (403) ist,
- Ausführen (411) der festen Vorgabe, wenn der zweite Modus (MANUEL) ausgewählt ist (410),
und dass das Verfahren außerdem aufweist:
- Initialisieren (300) der Variablen v auf dem ersten vordefinierten Wert,
- Zuweisen (303) des zweiten vordefinierten Werts zur Variablen v, wenn eine Zuordnung zu einer Hauptvorrichtung erkannt wird (302),
- Zuweisen (301) des ersten vordefinierten Werts zur Variablen v, wenn eine Abkopplung von der Hauptvorrichtung erkannt wird (304).

2. Verfahren nach Anspruch 1, **dadurch gekennzeichnet, dass** es außerdem aufweist:
- Erkennen, ob die Variable v manuell geändert wird.

3. Verfahren nach Anspruch 2, **dadurch gekennzeichnet, dass** das Verfahren außerdem aufweist:
- Anzeigen einer Information, die indiziert, die externe Zeitprogrammierung zu deaktivieren, wenn die Variable v gleich dem ersten vordefinierten Wert (310) ist, nachdem eine Zuordnung zu einer Hauptvorrichtung erkannt wird (302).

4. Verfahren nach einem der Ansprüche 2 und 3, **dadurch gekennzeichnet, dass** es außerdem aufweist:
- Anzeigen einer Information, die indiziert, die externe Zeitprogrammierung zu reaktivieren, wenn die Variable v vom ersten vordefinierten Wert zum zweiten vordefinierten Wert übergeht (312), nachdem eine Zuordnung zu einer Hauptvorrichtung erkannt wird (302).

5. Verfahren nach einem der Ansprüche 1 bis 4, **dadurch gekennzeichnet, dass** jede Zeitprogrammierung mehrere Vorgaben aufweist, und dass jede Vorgabe einen einem vordefinierten Zeitpunkt zugeordneten Sollwert aufweist, wobei der vordefinierte Zeitpunkt den Beginn einer Zeitspanne bestimmt, während der die Vorgabe wirksam ist.

6. Verfahren nach Anspruch 5, **dadurch gekennzeichnet, dass** die Reglervorrichtung (200) ein Thermostat ist, dass jeder Sollwert eine Temperatur ist, wobei die Reglervorrichtung (200) außerdem Einrichtungen, um eine Temperatur zu messen, und Einrichtungen aufweist, um die Temperatur zu halten oder zu verändern, um jede Vorgabe auszuführen.

7. Verfahren nach Anspruch 5, **dadurch gekennzeichnet, dass** die Reglervorrichtung (200) eine Verwaltungsvorrichtung einer Beleuchtung ist, dass jeder Sollwert einen Lichtstrom oder eine Farbtemperatur mindestens einer Lichtquelle indiziert, wobei die Reglervorrichtung (200) außerdem Einrichtungen, um den Lichtstrom oder die Farbtemperatur der mindestens einen Lichtquelle zu bestimmen, und Einrichtungen aufweist, um den Lichtstrom oder die Farbtemperatur der mindestens einen Lichtquelle zu verändern, um jede Vorgabe auszuführen.

8. Verfahren nach Anspruch 5, **dadurch gekennzeichnet, dass** die Reglervorrichtung (200) eine Verwaltungsvorrichtung von Rollläden ist, dass jeder Sollwert eine Öffnungsstellung mindestens eines Ladens oder einen Ausrichtungsgrad von Lamellen mindestens eines Rollos indiziert, wobei die Reglervorrichtung (200) außerdem Einrichtungen, um die Öffnungsstellung des mindestens einen Ladens oder den Ausrichtungsgrad der Lamellen des mindestens einen Rollos zu bestimmen, und Einrichtungen aufweist, um die Öffnungsstellung des mindestens einen Ladens oder den Ausrichtungsgrad der Lamellen des mindestens einen Rollos zu halten oder zu verändern, um jede Vorgabe auszuführen.

9. Reglervorrichtung (200), die einen ersten Modus (AUTO) und einen zweiten Modus (MANUEL) aufweist, wobei die ersten und zweiten Modi abwechselnd ausgewählt werden können, wobei die Reglervorrichtung (200) außerdem eine feste Vorgabe und eine interne Zeitprogrammierung aufweist, wobei die Reglervorrichtung (200) in einem Kommunikationsnetzwerk (211) einer Hauptvorrichtung (210) zugeordnet werden kann, die eine externe Zeitprogrammierung aufweist, wobei die Reglervorrichtung (200) **dadurch gekennzeichnet ist, dass** sie aufweist:
- Einrichtungen zum Ausführen (402) der internen Zeitprogrammierung, wenn der erste Modus (AUTO) ausgewählt ist und wenn eine Variable v der Reglervorrichtung gleich einem ersten vordefinierten Wert ist,
- Einrichtungen zum Ausführen (404) der externen Zeitprogrammierung, wenn der erste Modus (AUTO) ausgewählt ist und wenn die Variable v gleich einem zweiten vordefinierten Wert ist,
- Einrichtungen zum Ausführen (411) der festen Vorgabe, wenn der zweite Modus (MANUEL) ausgewählt ist,
und aufweist:
- Einrichtungen zum Initialisieren (300) der Variablen v auf dem ersten vordefinierten Wert,
- Einrichtungen zum Zuweisen (303) des zweiten vordefinierten Werts zur Variablen v, wenn eine Zuordnung zu einer Hauptvorrichtung erkannt wird,
- Einrichtungen zum Zuweisen (301) des ersten vordefinierten Werts zur Variablen v, wenn eine Abkopplung von der Hauptvorrichtung erkannt wird.

10. Reglervorrichtung nach Anspruch 9, **dadurch gekennzeichnet, dass** jede Zeitprogrammierung mehrere Vorgaben aufweist, wobei jede Vorgabe einen einem vordefinierten Zeitpunkt zugeordneten Sollwert aufweist, wobei der vordefinierte Zeitpunkt den Beginn einer Zeitspanne bestimmt, während der die Vorgabe wirksam ist, und dass die Reglervorrichtung (200) ein Thermostat ist, wobei jede Vorgabe Temperatursollwerte aufweist, und wobei die Reglervorrichtung (200) außerdem Einrichtungen zum Messen einer Temperatur und Einrichtungen aufweist, um die Temperatur zu halten oder zu verändern, um jede Vorgabe auszuführen.

11. Computerprogramm, **dadurch gekennzeichnet, dass** es Befehle enthält, um das Verfahren nach einem der Ansprüche 1 bis 8 durch einen Prozessor zu implementieren, wenn das Programm vom Prozessor ausgeführt wird.

12. Informationsspeichermedium, **dadurch gekennzeichnet, dass** es ein Computerprogramm speichert, das Befehle enthält, um das Verfahren nach einem der Ansprüche 1 bis 8 durch einen Prozessor zu implementieren, wenn das Programm vom Prozessor ausgeführt wird.

## Claims

1. Method for managing regulation of a regulating device (200), the regulating device (200) having a first mode (AUTO) and a second mode (MANUAL), said first and second modes being selectable alternatives, the regulating device (200) further comprising a stipulated setpoint and an internal temporal program, the regulating device (200) being able to be associated, in a communication network (211), with a master device (210) comprising an external temporal program, the method being executed by the regulating device (200) and being **characterized in that** it comprises steps of:
- - executing (402) the internal temporal program when the first mode (AUTO) is selected (400) and when a variable v of the regulating device is equal to a first predefined value (401),
- - executing (404) the external temporal program when the first mode (AUTO) is selected (400) and when said variable v is equal to a second predefined value (403),
- - executing (411) the stipulated setpoint when the second mode (MANUAL) is selected (410),
and **in that** that the method further comprises:
- initializing (300) the variable v to the first predefined value,
- assigning (303) to the variable v the second predefined value when an association with a master device is detected (302),
- assigning (301) to the variable v the first predefined value if a disassociation from the master device is detected (304).

2. Method according to Claim 1, **characterized in that** it further comprises:
- detecting whether the variable v is modified manually.

3. Method according to Claim 2, **characterized in that** the method further comprises:
- displaying information indicating to deactivate the external temporal program if the variable v is equal to the first predefined value (310) after an association with a master device is detected (302) .

4. Method according to one of Claims 2 and 3, **characterized in that** it further comprises:
- displaying information indicating to reactivate the external temporal program if the variable v changes (312) from the first predefined value to the second predefined value after an association with a master device is detected (302).

5. Method according to any one of Claims 1 to 4, **characterized in that** each temporal program comprises a plurality of setpoints and **in that** each setpoint comprises a setpoint value associated with a predefined time, said predefined time determining the start of a time slot during which said setpoint is effective.

6. Method according to Claim 5, **characterized in that** the regulating device (200) is a thermostat and **in that** each setpoint value is a temperature, the regulating device (200) further comprising means for measuring a temperature and means for maintaining or making vary said temperature so as to execute each setpoint.

7. Method according to Claim 5, **characterized in that** the regulating device (200) is a device for managing lighting and **in that** each setpoint value indicates a luminous flux or a colour temperature of at least one light source, the regulating device (200) further comprising means for determining the luminous flux or the colour temperature of said at least one light source and means for modifying the luminous flux or the colour temperature of said at least one light source so as to execute each setpoint.

8. Method according to Claim 5, **characterized in that** the regulating device (200) is a device for managing roller shutters and **in that** each setpoint value indicates an open position of at least one shutter or a degree of orientation of slats of at least one blind, the regulating device (200) further comprising means for determining the open position of the at least one shutter or the degree of orientation of the slats of the at least one blind and means for maintaining or making vary the open position of the at least one shutter or the degree of orientation of the slats of the at least one blind so as to execute each setpoint.

9. Regulating device (200) comprising a first mode (AUTO) and a second mode (MANUAL), said first and second modes being selectable alternatives, the regulating device (200) further comprising a stipulated setpoint and an internal temporal program, the regulating device (200) being able to be associated, in a communication network (211), with a master device (210) comprising an external temporal program, the regulating device (200) being **characterized in that** it comprises:
- - means for executing (402) the internal temporal program when the first mode (AUTO) is selected and when a variable v of the regulating device is equal to a first predefined value,
- - means for executing (404) the external temporal program when the first mode (AUTO) is selected and when said variable v is equal to a second predefined value,
- - means for executing (411) the stipulated setpoint when the second mode (MANUAL) is selected,
and comprises:
- means for initializing (300) the variable v to the first predefined value,
- means for assigning (303) to the variable v the second predefined value when an association with a master device is detected,
- means for assigning (301) to the variable v the first predefined value if a disassociation from the master device is detected.

10. Regulating device according to Claim 9, **characterized in that** each temporal program comprises a plurality of setpoints, each setpoint comprising a setpoint value associated with a predefined time, said predefined time determining the start of a time range during which said setpoint is effective, and **in that** the regulating device (200) is a thermostat, each setpoint comprising temperature-setpoint values, and the regulating device (200) further comprising means for measuring a temperature and means for maintaining or making vary said temperature so as to execute each setpoint.

11. Computer program, **characterized in that** it comprises instructions for implementing, by means of a processor, the method according to any one of Claims 1 to 8, when said program is executed by said processor.

12. Data storage medium, **characterized in that** it stores a computer program comprising instructions for implementing, by means of a processor, the method according to any one of Claims 1 to 8, when said program is executed by said processor.
